(19) Europäisches Patentamt
European Patent Office
Office européen des brevets

(11) Numéro de publication: **0 219 427**
**B1**

(12) **FASCICULE DE BREVET EUROPEEN**

(45) Date de publication du fascicule du brevet: **09.05.90**

(51) Int. Cl.$^5$: **C 03 C 25/02,** C 08 G 12/42, C 04 B 26/12

(21) Numéro de dépôt: **86402214.0**

(22) Date de dépôt: **07.10.86**

# (54) Composition pour l'encollage de fibres minérales et fibres minérales encollées.

(30) Priorité: **09.10.85 FR 8514943**

(43) Date de publication de la demande:
**22.04.87 Bulletin 87/17**

(45) Mention de la délivrance du brevet:
**09.05.90 Bulletin 90/19**

(84) Etats contractants désignés:
**AT BE CH DE FR GB IT LI LU NL SE**

(56) Documents cités:
**FR-A-2 062 212**
**GB-A- 809 662**
**US-A-2 839 484**
**US-A-3 488 310**

**CHEMICAL ABSTRACTS, vol. 83, no. 24, 15 décembre 1975, page 147, résumé no. 195600q, Columbus, Ohio, US**

**CHEMICAL ABSTRACTS, vol. 70, no. 12, 24 mars 1969, page 35, résumé no. 48242c, Columbus, Ohio, US; & ZA-A-68 01 176 (OWENS-CORNING FIBERGLAS CORP.) 26-07-1968**

(73) Titulaire: **ISOVER SAINT-GOBAIN**
**Les Miroirs 18, avenue d'Alsace**
**F-92400 Courbevoie (FR)**

(72) Inventeur: **De Goys, de Mezeyrac, Charles**
**34 Allée du Bois de Graville**
**F-91190 Gif-sur-Yvette (FR)**
Inventeur: **Fugier, Roger**
**90 Avenue Pierre Curie**
**F-60290 Rantigny (FR)**
Inventeur: **Gicquel, Bernard**
**8 Allée des Bouleaux**
**F-95350 St Brice Sous Foret (FR)**
Inventeur: **Tetard, Serge**
**15 Rue du Docteur Roux**
**F-60100 Nogent sur Oise (FR)**

(74) Mandataire: **Muller, René et al**
**SAINT-GOBAIN RECHERCHE 39, quai Lucien Lefranc**
**F-93304 Aubervilliers (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 219 427 B1

## Description

La présente invention a traite à la fabrication de produits d'isolation à base de fibres minérales.

L'invention se propose notamment de fournir des produits d'isolation à base de fibres minérales, présentant une bonne tenue à haute température, utilisables notamment sous forme de feutres d'isolation, de coquilles pour l'isolation des tuyauteries, de matelas pour la confection des produits moulés, etc.

Les produits d'isolation à base de fibres minérales sont formés à partir de fibres obtenues par exemple selon la technique connue d'étirage centrifuge. Les fibres sont liées entre elles lors d'un traitement qui fournit en outre les propriétés spécifiques désirées pour les produits d'isolation. Ce traitement peut être effectué de différentes façons: on peut par exemple d'abord rassembler les fibres sur un organe collecteur, par exemple un convoyeur, les comprimer en un matelas et les tremper ensuite dans une solution aqueuse contenant des résines phénoplastes ou aminoplastes. Mais il est nécessaire par la suite d'éliminer l'eau par un traitement thermique, ce qui conduit à des dépenses énergétiques supplémentaires.

C'est pourquoi, de préférence, on traite les fibres, au moment où elles sont projetées hors du centrifugeur, par pulvérisation d'une composition aqueuse généralement à base de résines phénoplastes, aminoplastes, ou un mélange des deux. L'eau est alors partiellement vaporisées, et le traitement thermique ultérieur sert essentiellement à la réticulation des résines et à la mise en forme du matelas de fibres liées.

Une composition aqueuse de résine apte à être utilisée dans une composition d'encollage doit présenter une bonne stabilité dans le temps et une diluabilité à l'eau élevée. Au sens de l'invention, on entend par composition d'encollage une composition aqueuse de résine telle qu'elle résulte de la condensation des produits de départ conduisant à l'obtention d'une résine, ou plus couramment, ladite composition à laquelle ont été ajoutés des additifs usuels d'encollage; ainsi que, le cas échéant, de l'urée supplémentaire. La diluabilité est, au sens de l'invention, définie de la façon suivante: la diluabilité

à l'eau dans le cas d'une solution aqueuse de résine est le volume d'eau désionisée que l'on peut, à une température donnée, ajouter à l'unité de volume de cette solution avant de provoquer la formation d'un trouble permanent.

Les compositions aqueuses utilisées couramment, notamment celles à base de résines aminoplastes, présentent une diluabilité qui peut être insuffisante dans certains cas: ainsi, dans la préparation des coquilles isolantes, où la température de formage est de l'ordre de 80°C, la faible diluabilité de la composition aqueuse de résine, qui se traduit par un temps de gélification assez court pour la composition d'encollage dans laquelle entre la composition aqueuse de résine, risque de conduire à un liage insuffisant des fibres imprégnées d'une telle composition: le liant est alors plus sec et le traitement thermique ultérieur conduit à une polymérisation non homogène. Les fibres ainsi imprégnées voient leurs propriétés mécaniques altérées du fait des difficultés d'utilisation de l'encollage sur une ligne industrielle.

Il apparait donc que la composition d'encollage joue un rôle essentiel dans les propiétés finales du produit d'isolation, car elle agit notamment sur les caractéristiques mécaniqes du produit.

On connaît depuis longtemps des compositions à base de résines mélamine-urée-formaldéhyde destinées à entrer dans une composition d'encollage pour fibres minérales. Mais ces compositions préparées selon les procédés usuels par condensation en présence de catalyseur, de formol, d'urée et de mélamine sont souvent instables au stockage et/ou, comme indiqué précédemment, présentent une diluabilité insuffisante pour assurer une bonne dispersion de la résine sur des fibres.

C'est pourquoi un encollage usuel à base d'une résine de ce type ne peut être appliqué par pulvérisation sur des fibres minérales chauffées. Un temps de gélification trop court conduit à une répartition non homogène du liant sur ls fibres. Seule une application par trempage d'une nappe de fibres minérales dans la composition d'encollage convient avec les résines aminoplastes connues pour obtenir un encollage convenable des fibres.

Cette limitation restreint les possibilités de mise en oeuvre des fibres liées par une composition d'encollage contenant les résines aminoplastes connues. Notamment un tel comportement exclut à priori une utilisation pour l'isolation thermique de tuyaux destinés à véhiculer des fluides portés à haute température, de l'ordre de 400°C. En effet pour ce type d'application, un compactage et un façonnage des fibres est nécessaire pour préparer des gaines tubulaires qui isolent correctement les tuyaux. Avec des fibrs nappées, on ne parvient pas à réaliser de telles opérations de compactage ou façonnage.

Un des buts de l'invention est donc de fournir une composition aqueuse à base de résine mélamine-urée-formaldéhyde qui, employée en tant que constituant d'une composition d'encollage pour fibres minérales, facilite l'utilisation d'une telle composition, notamment sa pulvérisation sur des fibres.

Il est encore connu de faboriser l'obtention de résines mélamine-urée formaldéhyde stables par l'apport d'un alcool dans la composition initiale. Ainsi, par exemple, le brevet EP 0 000 884 décrit des résines mélamine-urée-formaldéhyde dans lesquelles la résine est éthérifiée par du méthanol en milieu acide fort. L'éthérification solubilise la résine et bloque simultanément la réaction de condensation, en évitant notamment le dépôt de produits méthylolés nuisible à la stabilité de la résine. Mais c'est une méthode coûteuse. En outre, la durée du traitement thermique ultérieur de cuisson de la résine après sa pulvérisation sur les fibres est fortement accrue par rapport aux durées usuelles.

Le brevet FR—A—2 062 212 (Fiberglas Canada Ltd) décrit une résine formée à partir d'urée, de formaldéhyde, de mélamine, de méthanol, d'une alcanolamine et d'un acide gras. Cette résine est infiniment diluable à l'eau est est utilisable dans une composition d'encollage contenant ladite résine et

éventuellement une résine phénolique. Ce brevet ne décrit pas une résine ayant une bonne stabilité et conférant au produit isolant une résistance mécanique et une tenue à la la chaleur satisfaisante.

On a également proposé, par exemple dans le brevet US 3 488 310 (Chemical Abstract vol. 70 n° 12, 24 Mars 1969— n° 48 242 c), d'introduire un glycol dans une compostion à base d'une résine mélamine-urée-formaldéhyde. Mais on observe une mauvaise tenue au stockage du produit final formé après le traitement thermique qui réticule la résine. Cette mauvaise tennue au stockage se traduit par une altération de ses propriétés mécaniques.

Le brevet GB—A—809 662 (Monsanto) décrit la préparation de solutions aqueuses stables de résines mélamine-formaldéhyde ou mélamine-urée-formaldéhyde. La réaction de condensation a lieu en présence d'un polyol tel que éthylèneglycol, pentaérythritol. La résine est utile pour traiter des stratifiés et a une diluabilité à l'eau de 200 à 400%.

Ce type de résine ne peut être utilisé dans des compositions d'encollage qui doivent être pulvérisées sur des fibres minérales discontinues par suite de sa faible diluabilité à l'eau.

L'invention vise à fournir une composition aqueuse à base d'une résine aminoplaste du type mélamine-urée-formaldéhyde, diluable et stable au stockage, destinée à entrer dans une composition d'encollage pour fibres minérales, qui n'engendre pas les inconvénients mentionnés quant aux caractéristiques du produit final constitué par les fibres encollées et traitées thermiquement.

L'invention propose une nouvelle composition aqueuse à base d'une résine mélamine-urée-formaldéhyde destinée à entrer dans une composition d'encollage pour fibres minérales discontinues qui permet l'obtention de fibres encollées et donc de produits finis d'isolation, présentant toutes les caractéristiques mécaniques désirées, qui présente en outre une diluabilité très élevée qui peut être dans certains cas infinie, et qui est stable au stockage.

Conformément à l'invention, la composition aqueuse de résine aminoplaste, utilisable dans une composition d'encollage pour le traitement de fibres minérales discontinues, est caractérisée en ce que la résine est obtenue par condensation, en milieu basique, de formaldéhyde, d'urée et de mélamine en présence d'un composé polyméthylolé ayant une fonctionnalité au moins égale à 3 et ayant la formule générale:

$$R—C—(CH_2\,OH)_3 \quad \text{ou} \quad R—C—(CH_2\,OH)_2—CH_2—O—CH_2—C(CH_2\,OH)_2—R$$

où R est un radical hydrocarboné aliphatique, comprenant ou non un groupe hydroxyle;

— le rapport molaire F/M du nombre de moles de formaldéhyde par rapport au nombre de moles de mélamine étant compris entre (0,5 U/M + 1,5) et (3 U/M + 3);

— le rapport molaire U/M de nombre de moles d'urée par rapport au nombre de moles de mélamine étant compris entre 1,5 et 5;

— la quantité de composé polyméthylolé étant compris entre 0,2 et 2 moles par mole de mélamine;

— la résine ayant une diluabilité au moins égale à 1000% à température ambiante;

— la résine étant stable au stockage.

Selon une forme préférée de l'invention, l'alcool utilisé est choisi parmi le pentaérythritol, le dipentaérythritol, le triméthylolpropane, le ditriméthylolpropane.

De préférence, afin de favoriser la dissolution du polyol, le milieu réactionnel contient également une alcanolamine en très faibles quantités. On peut par exemple choisir la triéthanolamine, la diéthanolamine ou la diméthyléthanolamine.

Les proportions des différents composants de la composition aqueuse peuvent varier en fonction de l'utilisation ultérieure des fibres traitées.

Le polyol est pris en quantité suffisante pour conférer à la résine les propriétés de stabilité désirées. Mais ces quantités doivent être inférieures à celles qui empêcheraient sa dissolution. Le rapport molaire généralement convenable de l'alcool à la mélamine est compris entre 0,2 et 2 moles environ, de préférence entre 0,25 et 0,5 mole environ d'alcool par mole de mélamine.

On ne sait pas exactement comment réagit le polyol dans la composition mais sa présence améliore les propriétés mécaniques du produit final qui a été traité par une composition d'encollage comprenant ladite composition aqueuse. L'urée est présente à raison de 0,5 à 5 moles pour une mole de mélamine et de préférence de 1,5 à 2,5 moles. La quantité de formaldéhyde dépend à la fois de la quantité de mélamine et de la quantité d'urée introduite. De préférence, la réaction a lieu avec une quantité de formaldèhyde, exprimée en moles, comprise entre 1,4 U + 1,5 M et 3 U + 3 M où U désigne le nombre de moles d'urée et M le nombre de moles de mélamine. Enfin, le catalyseur basique est pris à raison de 0,01 à 0.1 mole par mole de mélamine environ. Avantageusement, le catalyseur est introduit en deux étapes afin de ne pas avoir une réactivité trop importante en début de réaction: la première introduction se fait pour former la résine intermédiaire, à base de formaldéhyde et d'urée, et il faut éviter lors de cette étape la formation de produits indésirables. Le cas échéant, il est possible d'introduire le catalyseur, qui est usuellement de la soude, uniquement dans la deuxième partie du cycle thermique associé au procédé, et conduisant à l'obtention de la résine finale, toujours afin de calmer la réactivité en début de cycle.

Il est également possible d'introduire une quantité supplémentaire de formaldéhyde, le cas échéant, pour augmenter la diluabilité de la résine. Dans cette hypothèse, on ajoute comme composant de la résine jusqu'à 3 moles de formaldéhyde par mole de mélamine, cette quantité étant introduite au cours d'une étape du procédé dè préparation distincte de celle où introduite la première quantité.

L'alcanolamine est introduit à l'état de traces, en quantité inférieure à 0,01 mole par mole de mélamine, suffisante pour faciliter la dissolution du polyol.

La composition aqueuse selon l'invention peut être stockée telle quelle pendant plusieurs semaines à température ambiante. Elle présente une diluabilité à l'eau, mesurée à température ambiante, au moins égale à 100%.

L'invention concerne également un procédé de préparation de la composition aqueuse de résine telle que décrite précédemment.

Selon ce procédé, on forme la résine de la façon suivante:

— on met en présence dans une première phase aux environ de 40°C le formaldéhyde en solution aqueuse et le polyol, avec éventuellement de l'alcanolamine,

— on ajoute le catalyseur basique, généralement de la soude,

— on ajoute l'urée afin de former une résine intermédiaire,

— on porte le mélange réactionnel aux environs de 80°C, on ajoute de nouveau du catalyseur basique, puis la mélamine,

— on maintient la température aux environs de 80°C pour poursuivre la réaction de condensation avec la mélamine tout en conservant une diluabilité à l'eau quasi infinie,

— on refroidit aux environs de 30°C,

— on ajuste le cas échéant le pH du mélange à une valeur aux environs de 9.

Suivant une caractéristique avantageuse de l'invention, les conditions de préparation de la composition aqueuse de résine sont les suivantes: l'urée est ajoutée pendant 30 minutes environ, le mélange est porté aux environs de 80°C en 30 minutes environ, on ajoute au mélange porté à 80°C du catalyseur basique en 10 minutes, puis la mélamine pendant 30 minutes, on maintient la température du mélange à 80°C pendant 90 minutes.

Pour obtenir une diluabilité à l'eau encore meilleure de la composition aqueuse de résine obtenue, il peut être souhaitable d'introduire après refroidissement du formaldéhyde dans les proportions nécessaires pour obtenir une diluabilité à l'eau d'au moins 1000%. Suivant la diluabilité désirée, on peut ajouter jusqu'à 3 moles de formaldéhyde par mole mélamine initiale.

L'invention vise également à fournir une composition d'encollage destinée à être appliquée par exemple par pulvérisation sur des fibres minérales, qui peut être la composition aqueuse de résine selon l'invention employée seule ou en mélange avec d'autres ingrédients.

Il est connu d'utiliser en tant que constituant d'une composition d'encollage pour fibres minérales des résines phénoliques thermodurcissables du type résole. De telles compositions sont facilement pulvérisées sur les fibres car les résines phénoliques polymérisent rapidement à hautes températures sans l'apparition de phénomènes indésirables de prégélification. Mais il est aussi connu que l'utilisation en tant que constituant d'une composition d'encollage de résines phénoliques conduit à des produits qui ne présentent pas une tenue à la chaleur très satisfaisante. On a cherché à améliorer les propriétés de tenue à la chaleur des produits finis en modifiant la résine phénolique de base, par exemple à l'aide de dicyandiamide. Une amélioration a effectivement été constatée.

Un autre but de l'invention est donc d'obtenir une nouvelle composition d'encollage comprenant une composition aqueuse à base de résine phénolique qui conduit à l'obtention de produits finis présentant une tenue à la chaleur encore améliorée.

Un autre but de l'invention est d'obtenir une composition d'encollage qui comprend parmi ses constituants une composition aqueuse de résine aminoplaste préparée à partir de mélamine, d'urée, et de formaldéhyde, selon l'invention, et qui se pulvérise facilement sur des fibres.

Un autre but de l'invention est d'optimiser les proportions respectives de la résine mélamine-urée-formaldéhyde d'une part, et phénolique d'autre part, en fonction des propriétés désirées de temps de gélification de la composition d'encollage et de tenue à la chaleur du produit final obtenu.

A cette fin, l'invention a pour objet une composition d'encollage destinée à être appliquée par pulvérisation, par exemple, sur des fibres minérales, qui comprend la composition aqueuse de résine telle que décrite précédemment, une composition aqueuse de résine phénolique thermodurcissable usuelle par une utilisation dans une composition d'encollage, de l'urée servant à capter le formaldéhyde libre, et des additifs usuels d'encollage.

Avantageusement, la composition d'encollage comprend, exprimées en parts de matière sèche, de 30 à 60 parts de résine selon l'invention, de 20 à 40 parts d'urée supplémentaire et de 10 à 30 parts de résine phénolique thermodurcissable.

L'invention a aussi pour objet un produit d'isolation, et notamment une coquille pour l'isolation des tuyauteries, qui, traitée par la composition d'encollage précédemment définie, présente une bonne tenue à la chaleur.

L'invention vise également d'autres buts.

Dans le domaine de l'isolation, les produits présentant une absence de coloration sont particulièrement recherchés, car ils peuvent trouver des applications variées.

Un autre but de l'invention est donc de fournir des produits d'isolation blancs. On peut citer par exemple les panneaux isolants de plafonds: ces produits consistent en la superposition d'un panneau de fibres minérales encollées, d'un voile de verre et d'une simple couche de peinture blanche conférant au produits son aspect esthétique final. Lorsque le panneau de fibres est jaune, une couche épaisse de

peinture est nécessaire pour que le panneau de plafond ait une couleur blanche. Dans le cas où le panneau de fibres est lui-même blanc, une couche bien moins épaisse de peinture est nécessaire, ce qui permet avantageusement des économies de matière.

A cette fin, l'invention a pour objet une composition d'encollage qui ne comprend que la résine mélamine-urée-formaldéhyde décrite précédemment, avec comme ingrédient un polyol du type R—C—$(CH_2OH)$ sa forme dimérique R—C—$(CH_2OH)_2$—$CH_2$—O—$CH_2$—$(CH_2OH)_2$—C—R, de l'urée et les additifs usuels d'encollage.

De préférence, la composition d'encollage comprend, pour 100 parts de matière sèche d'urée et de composition aqueuse de résine, de 65 à 90 parts de composition aqueuse de résine et de 10 à 35 parts d'urée.

Suivant cette variante, les produits traités par la composition d'encollage présentent également une bonne tenue à la chaleur.

L'invention concerne également un procédé de fabrication d'un produit d'isolation à base de fibres minérales discontinues, dans lequels intervient la composition d'encollage décrite précédemment, ainsi que le produit d'isolation obtenu par la mise en oeuvre dudit procédé.

D'autres caractéristiques et avantages de l'invention apparaîtront au cours de la description suivante d'exemples détaillés de réalisation.

La description indique des exemples de préparation de la composition aqueuse de résine, de la composition d'encollage et de produits à base de fibres minérales, qui sont également objets de l'invention.

D'une manière générale, une composition typique d'encollage comprend les additifs suivants, pour 100 parts de matière sèche de résine et d'urée:

— 0 à 5 parts de sulfate d'ammonium, généralement de 1 à 3,
— 0 à 2 parts de silane
— 0 à 20 parts d'huile, généralement 6 à 15,
— 0 à 20 parts d'ammoniaque à 20%, généralement de 3 à 12,

Le rôle de ces ingrédients est connu et n'est que breièvement rappelé ici: le sulfate d'ammonium sert de catalyseur de polycondensation (dans l'étuve à chaud) après la pulvérisation de la composition d'encollage sur les fibres; le silane est un agent de pontage entre les fibres et la résine, et joue également un rôle d'agent anti-vieillissement; les huiles sont des agents anti-poussière et hydrophobes. L'ammoniaque a, à froid, un rôle de retardateur de polymerisation; l'urée modifie la composition pour agir sur la prégélification de l'encollage et diminuer la pollution.

Certains des composants que la résine peuvent être supprimées pour adapter l'encollage à une ligne de production particulière, ou pour obtenir des propriétés finales particulières. Ainsi dans le cas où la composition d'encollage est appliquée sur des produits devant présenter une bonne tenue au feu, on utilise une composition comportant peu ou pas d'huile.

Parmi les exemples décrits, les exemples 1, 2, 3 et 4 correspondent à l'invention. L'exemple 5 est un contre exemple dans lequel on a remplacé un alcool convenable selon l'invention par de l'éthylène glycol. Pour établir une base cohérente de comparaison entre les divers exemples, on s'est référé dans chaque cas à un même rapport du nombre de fonctions alcool au nombre de moles de mélamine, proche de 2. Pour chaque exemple on distinguera la préparation de la composition aqueuse de résine, celle de la composition d'encollage, et la formation du produit fini.

Pour mieux apprécier les effets de la résine selon l'invention sur les produits finis obtenus, on a établi une comparaison entre certaines propriétés caractéristiques des matelas de fibres enrobées par une composition d'encollage à base, d'une part d'une composition aqueuse de résine selon l'invention et d'autre part d'une résine phénol-formol telle qu'elle est couramment utilisée dans ce type d'application.

Les comparaisons avec les produits connus sont toujours délicates à établir en raison des très nombreux paramètres qui contribuent à l'élaboration de ces propriétés. On retiendra la finesse des fibres, le taux de liant en poids du produit final, la couleur, la résistance à la traction, la résistance à l'arrachement, la reprise d'épaisseur après une compression prédéterminée.

On fera également une distinction en ce qui concerne la densité (exprimée en kg/$m^3$) des produits finis obtenus. Dans toute les gammes de produits susceptibles d'être élaborés à partir de fibres encollées, on vise notamment à préparer des coquilles stables à haute température, qui doivent en outre présenter une solidité et une cohésion satisfaisantes tout en étant relativement denses. Les exemples 1 et 2 correspondent à des produits peu denses, que l'on compare à un produit peu dense obtenu avec une résine usuelle; l'exemple 3 est un exemple selon l'invention relatif à un produit dense et l'exemple 4 décrit un contre-exemple relatif à un produit dense pour lequel on a introduit dans la composition aqueuse de résine un éthylèneglycol. Les propriétés correspondant aux exemples 3 et 4 seront comparées à celles d'un produit dense encollé avec une résine phénol-formol usuelle.

Les paramètres indiqués ont été déterminés à partir des tests suivants:

Mesure du micronaire:

Traditionnellement, la finesse des fibres est appréciée de façon globale par une mesure dite de micronaire définie par la norme ASTM D 1448—78. Le micronaire est déterminé de la façon suivante: un échantillon du produit, ordinairement de 5 g, est placé dans un compartiment traversé par un courant

gazeux émis dans des conditions, notamment de pression, bien fixes. L'échantillon traversé par le gaz forme un obstacle qui tend à freiner le passage de ce gaz. La mesure du débit gazeux est relevée sur un débit-mètre gradué. Ce sont ces valeurs définies pour des conditions normalisées qui sont relevées. Plus les fibres sont fines pour un même poids d'échantillon, plus le débit est faible.

Mesure de la résistance à la traction:

La résistance à la traction dite "aux anneaux" est mesurée suivant la norme ASTM-C—681—76. Suivant cette norme, des anneaux de dimension bien définie sont découpés dans le matelas ou feutre de fibres. Ces anneaux sont disposés sur deux barres cylindriques de traction. Ils sont soumis à des forces croissantes. On mesure la force exercée à la rupture. Pour obtenir des résultats comparables, la force exercée est rapportée au poids de l'échantillon. Les résultats sont exprimés en gf/g.

Mesure de reprise d'épaisseur:

Les mesures de reprise d'épaisseur se font selon la norme DIN 18165. On soumet des échantillons à une compression jusqu'au quart de leur épaisseur nominale pendant des temps déterminé et on mesure l'épaisseur retrouvée après décompression. La mesure s'effectue sans secouage des fibres. On utilise à cette fin une tige cylindrique dans laquelle coulisse un disque, la tige venant s'enfoncer dans le matelas et le disque venant prendre appui sur la surface.

Mesure de résistance à l'arrachement:

La mesure de résistance à l'arrachement est particulièrement significative pour les produits denses, qui, dans l'application qui leur est donnée, sont fréquemment recouverts de bandes de papier ou d'aluminium. Pour la déterminer, on appuie sur une éprouvette de dimensions préétablies une surface plane en un matériau déterminé que l'on colle à l'aide d'une colle normalisée. On détermine alors la force nécessaire pour arracher la surface plane. Cette mesure permet d'apprécier la cohésion des fibres qui constituent l'éprouvette.

Les résultants de ces mesures sont indiqués dans les tableaux 2 et 3. Pour les produits peu denses, on a indiqué (tableau 2) la densité (kg/$m^3$) le taux de liant retenu par les fibres, exprimé en pourcentage du poids total de fibres encollées, (taux liant %), le micronaire (F/5g), la couleur, la résistance à la traction exprimée en gf/g après fabrication, et après un test de vieillissement à l'autoclave où le produit est soumis à l'action de la vapeur d'eau pression à 107°C, (après auto.) et la reprise d'épaisseur (compression au quart de l'épaisseur pendant 24 h et pendant 3 mois). Les chiffres indiqués exprimés en pourcentage permettent une comparaison des différents exemples.

Pour les produits denses (tableau 3), on a indiqué de la même façon, la densité, le taux de liant, le micronaire, la couleur. On a indiqué également la résistance à l'arrachement après fabrication exprimée en Newton et le regonflement observé après le test de vieillissement à l'autoclave, exprimé en millimètres (regonflement).

On s'est référé, pour la comparaison des propriétés à celles obtenues pour des produits imprégnés d'une composition d'encollage à base d'une résine phénolique thermodurcissable standard: c'est-à-dire obtenue par condensation, en milieu basique, de phénol, de formaldéhyde et d'urée.

On a indiqué, dans le tableau 1, des quantités en moles des différents constituants entrant dans la préparation des compositions aqueuses de résine, ainsi que les rapports molaires rapportés à une mole de mélamine. Pour le formaldéhyde et le catalyseur, on a indiqué entre parenthèses les quantités supplémentaires ajoutées à une étape différente du procédé.

## Exemple 1

a) *Préparation d'une composition aqueuse de résine:*

On introduit dans un réacteur de 6 tonnes, 321,6 kg d'une solution aqueuse de formaldéhyde à 37% (soit 3962 moles de formaldéhyde pur), à 40°C, le pH étant compris entre 2,8 et 5. On ajoute pendant 1 minute, 0,5 kg de triéthanolamine sous forme d'une solution à 85% de pureté (soit 2,85 moles de triéthanolamine pure) ce qui amène le pH à 7,3 environ. On ajoute ensuite 58,3 kg de pentaérythritol soit 428 moles. On maintient le mélange à 40°C environ pendant 10 minutes.

On introduit le catalyseur de condensation sous forme d'une solution de soude à 47%, soit 0,65 kg ou 7,6 moles de soude pendant 5 minutes, ce qui amène le pH à 9,8 environ. Sans modifier la température, on ajoute 95,2 kg d'urée sous forme solide (soit 1585 moles) pendant 30 minutes. On élève en 30 minutes la température à 80°C puis, dès que cette température est atteinte, on ajoute 2,35 kg de soude supplémentaire en solution à 47% (soit 27,6 moles). L'addition se fait en 10 minutes. On ajoute ensuite 100 kg de mélamine sous forme solide (soit 793 moles) et on maintient le mélange pendant 90 minutes à 80°C, pour réaliser la condensation de la mélamine et du formaldéhyde. On refroidit jusqu'à 30°C pendant 30 minutes. On ajoute 96,6 kg de formaldéhyde en solution (soit 1191 moles de formaldéhyde pur) tout en refroidissant de 30°C à 25°C pendant 10 minutes. Tout en continuant à refroidir, on introduit de l'acide sulfurique dilué en quantité suffisante pour atteindre un pH de 9,2 environ, soit environ 2 kg d'une solution d'acide sulfurique à 15%.

La résine est stockée à température ambiante, aux environs de 18°C, de préférence sous agitation. Après un mois de stockage, elle présente une diluabilité mesurée à température ambiante supérieure à 1000%, et une couleur blanche et une teneur en extrait sec de l'ordre de 50%.

b) *Préparation d'une composition d'encollage:*

A partir de la résine synthétisée selon l'invention, on prépare un encollage en ajoutant à la composition aqueuse de résine précédemment préparée de l'urée supplémentaire et des additifs d'encollage. Les additifs d'encollage couramment employés sont du silane et une huile minérale. On peut citer par exemple un amino-silane commercialisé par la Société Union Carbide sous l'appellation A 1100, qui est hydrolysé par catalyse acide, en solution aqueuse à 2%. On peut utiliser comme huile minérale l'huile commercialisée par la société Mobil Oil sous l'appellation Mulrex 91.

On mélange ces divers ingrédients dans les proportions suivantes exprimées en parties pondérales de matière sèche: 70 parts de résine, 30 parts d'urée et, pour 100 parts pondérales de l'ensemble résine et urée supplémentaire, 0,3% de silane et 6% d'huile minérale.

c) *Formation du produit fini:*

On se place à la sortie d'un dispositif de fabrication de fibres minérales par étirage centrifuge connu en soi et on pulvérise sur les fibres, entre leur sortie du dispositif centrifuge, et leur réception sur un organe collecteur, la composition d'encollage décrite précédemment. L'eau contenue dans la composition est partiellement vaporisée du fait de la température élevée. Après réception des fibres, et formation d'un matelas, on les soumet à un traitement thermique à l'étuve, à une température de 200°C, pendant 2 minutes environ, ce qui conduit à une polymérisation de la résine. Le produit fibreux obtenu présente une couleur blanche et ses propriétés mécaniques sont tout à fait comparables à celles obtenues à partir d'une résine phénolique standard, comme cela apparait tableau 2.

Exemple 2

a) *Préparation d'une composition aqueuse de résine:*

On introduit dans un réacteur de 150 litres équipé d'un système d'agitation de régulation de température et de condensation de vapeur 110 kg d'une solution aqueuse de formaldéhyde à 37% (soit 1355 moles de formaldéhyde pur) puis 22 kg de triméthylolpropane, soit 164 moles. Les 164 moles de triméthylolpropane correspondant à 492 fonctions alcool, ce qui implique un rapport de nombre de fonctions alcool au nombre de moles de mélamine de 1,8.

On ajuste la température du milieu réactionnel à 40°C. Le pH est alors de 4,9.

On introduit ensuite 217 g de soude en solution aqueuse à 50%, soit 2,71 moles de soudre pure, pendant 5 minutes, ce qui amène le pH à 9,7. On maintient toujours la température aux environs de 40°C. On poursuit en introduisant de façon régulière en 30 minutes environ 32,5 kg d'urée, soit 541 moles. On fait monter la température à 80°C en 30 minutes. On ajoute, en une deuxième étape, 814 g de soude en solution aqueuse à 50%, soit 10,2 moles de soude pure. Le pH est environ 10,5. On ajoute ensuite 34,2 kg de mélamine, soit 271 moles, tout en maintenant la température aux alentours de 80°C. On maintient ce palier pendant près de 4 heures à patir du début de l'introduction de la mélamine, puis on refroidit en 12 minutes jusqu'à 25°C.

On ajoute enfin 33 kg de formaldéhyde à 37%, soit 407 moles de formaldéhyde pur, en 12 minutes. Le pH avoisine alors 9. On l'ajuste, si nécessaire, à cette valeur, soit avec de l'acide sulfurique, soit avec de la soude.

La résine est stockée aux environs de 18°C. Il est préférable d'attendre environ 24 heures avant de l'utiliser.

Elle est caractérisée par une teneur en extrait sec de 50%, une densité mesurée à 16°C de 1,23 g/cm$^3$, une diluabilité infinie après un mois de stockage, et une couleur blanche.

b) *Préparation d'une composition d'encollage:*

On procède de la même façon que dans l'exemple 1, en mélangeant les ingrédients dans les proportions suivantes: 85 parts de résine, 15 parts d'urée, les proportions étant exprimées en parties pondérales de matière sèche, et pour 100 parts de l'ensemble résine et urée supplémentaire 0,3% de silane et 6% d'huile minérale.

c) *Formation du produit fini:*

On forme un matelas de fibres de la même façon que celle indiquée lors de la description de l'exemple 1. Le produit obtenu présente également une couleur blanche et ses propriétés mécaniques sont comparables à celles d'une composition d'encollage usuelle, comme cela apparait dans le tableau 2.

Exemple 3

a) *Préparation d'une composition aqueuse de résine:*

On procède de façon identique à celle de l'exemple 1 a).

b) *Préparation d'une composition d'encollage:*

On procède de la même façon que dans l'exemple 1 b) mais en mélangeant 70 parts de résine, 30 parts d'urée, 0,3 part de silane et 1 part de sulfate d'ammonium, les proportions étant exprimées en parties pondérales de matière sèche.

c) *Formation du produit fini:*

On prépare un produit plus dense, en le compactant davantage avant le traitement thermique à l'étuve. Ce type de produit, ayant une densité de l'ordre de 80 kg/m², convient particulièrement pour la préparation de coquilles. Il présente également la couleur blanche désirée.

Exemple 4

Cet exemple concerne und composition aqueuse de résine convenant particulièrement bien quant à ses propriétés de stabilité et de diluabilité, et surtout quant à sa reproductibilité.

Le procédé mis en oeuvre est très proche de celui décrit en relation avec l'exemple 1. Simplement, on modifie les constituants de la composition de la façon suivante: on introduit initialement dans le réacteur 321,6 kg d'une solution aqueuse de formaldéhyde à 37%, la température étant stabilisée aux environs de 40°C. On ajoute ensuite 43,2 kg de pentaérythritol, soit 317 moles. Le rapport molaire de l'alcool à la mélamine est de 0.4 au lieu de 0.54 dans l'exemple 1. Le pentaérythritol est introduit en 15 minutes, et la température est maintenue à 40°C pendant 10 minutes. On introduit ensuite 0.6 kg de scude pendant 5 minutes, tout en maintenant la température à 40°C. Sans modifier la température, on introduit 95,2 kg d'urée sous forme solide en 30 minutes. Lorsque la résine intermédiaire est formée, on augmente la température jusqu'à 80°C ± 1°C en 35 minutes. Dès que la température de 80°C est atteinte, on introduit 2.4 kg de soude en 10 minutes, en maintenant la température à 80°C. On introduit alors 100 kg de mélamine en 30 minutes tout en maintenant la température à 80°C ± 1°C.

On maintient la température à 80°C ± 1°C pendant 10 minutes. La diluabilité à l'eau doit encore être quasi infinie. On refroidit le réacteur à 30°C en 30 minutes. On ajoute 96.5 kg supplémentaire de formaldéhyde en 15 minutes, en pendant ce temps la température s'abaisse à 25°C. On ajuste le pH à 9.2 ± 0.2 avec de l'acide sulfurique dilué en 15 minutes, tout en refroidissant jusqu'à la température de stockage, soit 17.5°C ± 2.5°C.

La composition aqueuse de résine obtenue a un extrait sec de 48.5% qui présente une absence de coloration, elle est stable après un mois de stockage et présente une diluabilité supérieure à 1000%.

Exemple 4a

Préparation d'une composition d'encollage.

Avec une composition aqueuse de résine préparée selon les données de l'exemple 4, on prépare une composition d'encollage avec les ingrédients suivants, dont la teneur est exprimée en parts pondérales pour 100 parts d'extrait sec: 50 parts de résine selon l'exemple 4, 20 parts d'une résine phénolique thermodurcissable du type résol usuel dans les compositions d'encollage, 30 parts d'urée. En outre, pour 100 parts d'extrait sec, il y a 0.3% en poids de silane et 0.5% en poids de sulfate d'ammonium, le reste étant de l'eau.

Pour préparer 100 kg de composition d'encollage dont la teneur calculée en extrait sec est de 18%, on mélange: 58,3 litres d'eau 15 litres de composition aqueuse de résine mélamine préparée selon l'exemple 4, 7,9 litres d'une solution d'urée à 50% (soit 8.97 kg d'urée liquide), 10 litres d'une composition aqueuse de résine phénolique du type résol ayant une teneur en extrait sec de 38,5% (soit 11.65 kg de résine liquide) et 2.70 litres d'une solution de silane à 2% (soit 2.69 kg de silane liquide).

Pour déterminer les propriétés de bonne tenue à la chaleur des produits sur lesquels est pulvérisée une telle composition d'encollage, on procède à des mesures d'enthalpie de réaction exothermique de dégradation de l'encollage à la chaleur.

On mesure l'enthalpie différentielle produit par l'encollage à l'aide d'un appareil SETARAM DSC 111 dans lequel on établit un gradient thermique de 4°C par minute, en faisant varier la température entre 250°C et 750°C.

A titre comparatif, on se réfèrera à des mesures analogues opérées sur une composition d'encollage à base d'une résine phénolique du type résol usuelle, et à base d'une résine phénolique modifiée par du dicyandiamide.

Les résultats sont exprimés en calories par gramme de matière sèche organique, c'est-à-dire exception faite de l'eau et des cendres.

| | Ex. 4 a selon l'invention | Composit. d'encollage à base de résine phénol. de type résol et d'urée | Composit. d'encollage à base de résine phénol. modifiée par du dicyandiamide |
|---|---|---|---|
| Δ H (cal/g) | −2700 | −3600 | −3300 |

L'enthalpie différentielle mesurée est plus faible avec la composition d'encollage selon l'invention. L'un des buts de l'invention, à savoir la production d'une composition d'encollage comprenant une composition aqueuse à base de résine phenolique qui conduit à l'obtention d'un produit fini présentant une tenue à la chaleur améliorée, est donc effectivement atteint. La meilleure tenue à la chaleur de l'encollage se répercute sur le produit fini.

Exemple 5

Il s'agit d'un contre exemple dans lequel on introduit dans le mélange réactionnel de l'éthylèneglycol.

a) *Préparation d'une composition aqueuse de résine:*

On procède de façon analogue à celle indiquée en relation avec l'exemple 2, avec les quantités suivantes de réactif, et en remplaçant le triméthylol propane par de l'éthylèneglycol.

— 110 kg d'une solution de formol à 37% en début de cycle et 33 kg en fin de cycle,

— 32,6 kg d'urée,

— 34,2 kg de mélamine,

— 15,15 kg d'éthylèneglycol, soit 244 moles, ce qui correspond à 1,8 fonction alcool par mole de mélamine, comme dans l'exemple 2.

On introduit la même quantité de soude, en deux étapes distinctes, que celle indiquée dans l'exemple 2.

On maintient le palier en température aux environs de 80°C pendant 2 heures et 15 minutes.

La résine obtenue est caractérisée par un extrait sec de 49,2% et par une diluabilité infinie après un mois de stockage.

b) *Préparation d'une composition d'encollage:*

On procède de la même façon dans l'exemple 3 b.

c) *Formation du produit fini:*

On procède de façon analogue à celle décrite en relation avec les exemples précédents, mais on prépare un matelas de fibres beaucoup plus dense. Ce type de produits ayant une densité de l'ordre de 80 $kg/m^2$ convient particulièrement pour la prèparation de coquilles.

Toutefois, le tableau 2 met en évidence l'abaissement des propriétés mécaniques du produit fini obtenu, en particulier la résistance à l'arrachement après fabrication. La composition aqueuse de résine utilisée dans l'encollage est donc moins intéressante que selon l'invention.

TABLEAU 1

| Exemple | mélamine M (moles) | alcool A (moles) | fonctions alcools (mole mélam.) | urée U (moles) | formaldéhyde F (moles) | alcanolamine a (moles) | catalyseur C (moles) | A/M | U/M | F/M | a/M | C/M |
|---|---|---|---|---|---|---|---|---|---|---|---|---|
| 1 | 793 | 428,2 | 2,16 | 1585 | 3962 (+1191) | 2,85 | 7.6 (+27,6) | 0,54 | 2 | 5 (+1,5) | 0,0036 | 0,01 (+0,034) |
| 2 | 271 | 164 | 1,8 | 541 | 1355 (+407) | — | 2,71 (+10,2) | 0,6 | 2 | 5 (+1,5) | — | 0,01 (+0,037) |
| 3 | 271 | 164 | 1,8 | 541 | 1355 (+407) | — | 2,71 (+10,2) | 0,6 | 2 | 5 (+1,5) | — | 0,01 (+0,037) |
| 4 | 793 | 317 | | 1585 | 3962 (+1191) | — | 7,6 (+27,6) | 0,4 | 2 | 5 (+1,5) | — | 0,01 (+0,034) |
| 5 | 271 | 244 | 1,8 | 541 | 1355 (+407) | — | 2,71 (+10.2) | 0,9 | 2 | 5 (+1,5) | — | 0,01 (+0,037) |

TABLEAU 2

| Composition d'encollage à base de: | densité kg/m³ | taux liant % | micronaire F/5g | couleur | résistance à la traction gf/g | | reprise d'épaisseur après: | |
|---|---|---|---|---|---|---|---|---|
| | | | | | après fab. | après auto. | 24 h de compres. | 3 mois de compres. |
| Résine phénolique standard | 8.4 | 5 | 2.6 | jaune | 153 | 85 | 128 | 118 |
| Exemple 1 | 8.4 | 54 | 2.6 | blanc | 140 | 76 | 126 | 119 |
| Exemple 2 | 8.4 | 5 | 2.6 | blanc | 147 | 67 | 125 | 117 |

TABLEAU 3

| Composition d'encollage à base de: | densité $kg/m^3$ | taux liant % | micronaire F/5g | couleur | résist. à l'arrach. après fab. | regonf. mm |
|---|---|---|---|---|---|---|
| Résine phénolique standard | 80 ± 5 | 4.5 | 4 | jaune | 50 ± 5 | 5 |
| Exemple 3 | 87 ± 5 | 6 | 4 | blanc | 60 ± 5 | 2.5 |
| Exemple 5 | 85 ± 5 | 5.2 | 4 | blanc | 29 ± 5 | 10 |

**Revendications**

1. Composition aqueuse de résine aminoplaste, utilisable dans une composition d'encollage pour le traitement de fibres minérales discontinues, caractérisée en ce que la résine est obtenue par condensation, en milieu basique, de formaldéhyde, d'urée et de mélamine en présence d'un composé polyméthylolé ayant une fonctionnalité au moins égale à 3 et ayant la formule générale:

$$R—C—(CH_2\,OH)_3 \quad \text{ou} \quad R—C—(CH_2\,OH)_2—CH_2—O—CH_2—C(CH_2\,OH)_2—R$$

où R est un radical hydrocarboné aliphatique, comprenant ou non un groupe hydroxyle;

— le rapport molaire F/M du nombre de moles de formaldéhyde par rapport au nombre de moles de mélamine étant compris entre (0,5 U/M + 1,5) et (3 U/M + 3);

— le rapport molaire U/M de nombre de moles d'urée par rapport au nombre de moles de mélamine étant compris entre 1,5 et 5;

— la quantité de composé polyméthylolé étant compris entre 0,2 et 2 moles par mole de mélamine;

— la résine ayant une diluabilité au moins égale à 1000% à température ambiante;

— la résine étant stable au stockage.

2. Composition selon la revendication 1, caractérisée en ce que le composé polyméthylolé est choisi parmi le pentaérythritol, le dipentaérythritol, le triméthylolpropane, le ditriméthylolpropane.

3. Composition selon l'une des revendications 1 et 2, caractérisée en ce que le composé polyméthylolé est présent à raison de 0,25 à 0,5 moles par mole de mélamine.

4. Composition selon l'une des revendications 1 à 3, caractérisée en ce que la réaction de condensation est faite en présence d'une alcanolamine.

5. Composition selon la revendication 4, caractérisée en ce que l'alcanolamine est choisie parmi la trièthanolamine, la diéthanolamine, la diméthyléthanolamine.

6. Composition selon l'une des revendications 1 à 5, caractérisée en ce que les ingrédients de la résine sont pris dans les quantités suivantes pour M mole de mélamine:

— 0,2 M mole à 2 M moles de composé polyméthylolé,

— 1,5 M mole à 5 M moles d'urée, soit U moles d'urée

— 0,5 U + 1,5 M à 3 U + 3 M moles de formaldéhyde,

— 0 mole à 0,01 M moles d'alcanolamine,

— 0,01 M mole à 0,1 M moles d'un catalyseur basique.

7. Composition selon l'une des revendications 1 à 5, caractérisée en ce que les ingrédients pour la préparation de la résine sont pris dans les quantités suivantes pour M moles de mélamine:

— 0,25 M à 0,5 M mole de composé polyméthylolé,

— 1,5 M à 2,5 M moles d'urée, soit U moles d'urée,

— 0,5 U + 1,5 M à 3 U + 3 M moles de formaldéhyde,

— 0 à 0,01 M moles d'alcanolamine,

— 0,01 à 0,1 M moles d'un catalyseur basique.

8. Composition selon la revendication 6 ou 7, caractérisée en ce que parmi les ingrédients pour la préparation de la résine, on utilise une quantité supplémentaire de formaldéhyde pouvant aller jusqu'à 3 moles de formaldéhyde par mole de mélamine.

9. Procédé de préparation d'une composition aqueuse selon l'une des revendications 1 à 8, caractérisée en ce qu'on forme la résine par condensation en milieu basique de formaldéhyde, d'urée et de mélamine, de la façon suivante:

— on met en présence aux environs de 40°C, le formaldéhyde en solution aqueuse et le composé polyméthylolé, avec éventuellement l'alcanolamine,

— on ajoute le catalyseur basique, de préférence de la soude,

— on ajoute l'urée afin de former une résine intermédiaire,

— on porte le mélange réactionnel aux environs de 80°C, on ajoute de nouveau du catalyseur basique puis la mélamine,

— on maintient la température aux environs de 80°C pendant le temps nécessaire à la réaction de condensation avec la mélamine tout en conservant une diluabilité à l'eau quasi infinie,

— on refoidit aux environs de 30°C,

— on ajuste le cas échéant le pH à une valeur aux environs de 9.

10. Procédé selon la revendication 9, caractérisé en ce que:

— l'urée est ajoutée pendant 30 minutes environ,

— le mélange est porté aux environs de 80°C en 30 minutes,

— on ajoute au mélange porté aux environs de 80°C du catalyseur basique en 10 minutes environ, puis la mélamine pendant 30 minutes environ,

— on maintient la température du mélange aux environs de 80°C pendant environ 90 minutes.

11. Procédé selon l'une quelconque des revendications 9 ou 10, caractérisé en ce que, après refroidissement, on ajoute du formaldéhyde en solution aqueuse dans les proportions nécessaires pour obtenir une diluabilité à l'eau d'au moins 1000%.

12. Procédé selon la revendication 11, caractérisé en ce que on ajoute jusqu'à 3 moles de formaldéhyde par mole de mélamine.

13. Composition d'encollage pour fibres minérales, destinées à être utilisées à haute température, caractérisée en ce qu'elle contient la composition aqueuse de résine selon l'une des revendications 1 à 8 de l'urée supplémentaire, des additifs d'encollage et une composition aqueuse de résine phénolique du type résol usuelle.

14. Composition d'encollage selon la revendication 13, caractérisée en ce que pour 100 parts de matière sèche, elle comprend la composition aqueuse de résine selon l'une des revendications 1 à 8, à raison de 30 à 60 parts de matière sèche, de l'urée supplémentaire à raison de 20 à 40 parts de matière sèche et une composition aqueuse de résine phénolique du type résol usuelle à raison de 10 à 30 parts de matière sèche, le reste de la composition étant des additifs d'encollage et de l'eau.

15. Composition d'encollage pour fibres minérales, caractérisée en ce qu'elle comprend la composition aqueuse de résine selon l'une des revendications 1 à 8, de l'urée supplémentaire et des additifs d'encollage.

16. Composition d'encollage selon la revendication 16, caractérisée en ce que pour 100 parts de matière sèche, elle comprend la composition aqueuse selon l'une des revendications 1 à 8 à raison de 65 à 90 parts de matière sèche, de l'urée supplémentaire à raison de 10 à 35 parts de matière sèche, le reste de la composition étant des additifs d'encollage et de l'eau.

17. Procédé de fabrication d'un produit d'isolation à base de fibres minérales discontinues, selon lequel on forme les fibres par étirage centrifuge, on traite les fibres avec une composition d'encollage, à base d'une composition aqueuse de résine, et on fait subir aux fibres traitées un traitement thermique qui réticule la résine après élimination de l'eau, caractérisé en ce que on traite les fibres avec une composition d'encollage selon l'une des revendications 13 à 16.

## Patentansprüche

1. Wäßrige Aminoplasmazubereitung, verwendbar in einem Bindemittel zur Behandlung von diskreten Mineralfasern, dadurch gekennzeichnet, daß das Harz durch Kondensation von Formaldehyd, Harnstoff und Melamin in basischem Milieu in Gegenwart einer Polymethylol-Verbindung erhalten wurde, die eine Funktionalität von wenigstens 3 besitzt und die allgemeine Formel:

$$R—C—(CH_2OH)_3 \quad \text{oder} \quad R—C—(CH_2OH)_2—CH_2—O—CH_2—C(CH_2OH)_2—R$$

besitzt, in der R ein aliphatischer Kohlenwasserstoffrest, der gegebenenfalls eine Hydroxylgruppe enthält, ist;

— das molare Verhältnis F/M der Anzahl an Formaldehyd Molen im Verhältnis zur Anzahl an Melamin-Molen zwischen (0,5 U/M + 1,5) und (3 U/M +3) liegt;

— das molare Verhältnis U/M der Anzahl der Mole an Harnstoff im Verhältnis zur Anzahl der Mole an Melamin zwischen 1,5 und 5 liegt;

— die Menge der Polymethylol-Verbindung zwischen 0,2 und 2 Molen pro Mol Melamin liegt;

— das Harz eine Verdünnbarkeit von wenigstens gleich 1000% bei Raumtemperatur besitzt;

— das Harz lagerbeständig ist.

2. Zubereitung nach Anspruch 1, dadurch gekennzeichnet, daß die Polymethylol-Verbindung ausgewählt ist aus Pentaerythrit, Dipentaerythrit, Trimethylolpropan und Ditrimethylolpropan.

3. Zubereitung nach einem der Ansprüche 1 und 2, dadurch gekennzeichnet, daß die Polymethylolverbindung im Verhältnis von 0,25 bis 0,5 Molen pro Mol Melamin vorliegt.

4. Zubereitung nach einem der Ansprüche 1 bis 3, dadurch gekennzeichnet, daß die Kondensationsreaktion in Gegenwart eines Alkanolamins durchgeführt wird.

5. Zubereitung nach Anspruch 4, dadurch gekennzeichnet, daß das Alkanolamin ausgewählt wird aus Triethanolamin, Diethanolamin und Dimethylethanolamin.

6. Zubereitung nach einem der Ansprüche 1 bis 5, dadurch gekennzeichnet, daß die Bestandteile des Harzes in den folgenden Mengen pro Mol M an Melamin verwendet werden:

— 0,2 M Mol bis 2 M Mol an Polymethylol-Verbindung,

— 1,5 M Mol bis 5 M Mol Harnstoff entsprechend U Mol Harnstoff,

— 0,5 U + 1,5 M bis 3 U + 3 M Mol Formaldehyd,

— 0 Mol bis 0,01 M Mol Alkanolamin,

— 0,01 M Mol bis 0,1 M Mol eines basischen Katalysators.

7. Zubereitung nac einem der Ansprüche 1 bis 5, dadurch gekennzeichnet, daß die Bestandteile für die Herstellung des Harzes in den folgenden Mengen pro M Mole an Melamin gewählt werden:

— 0,25 M bis 0,5 M Mol an Polymethylol-Verbindung,

— 1,5 M bis 2,5 M Mole Harnstoff entsprechend U Mole Harnstoff,

— 0,5 U + 1,5 M bis 3 U + 3 M Mole an Formaldehyd,

— 0 bis 0,01 M Mole Alkanolamin,

— 0,01 bis 0,1 M Mole eines basischen Katalysators.

8. Zubereitung nach Anspruch 6 oder 7, dadurch gekennzeichnet, daß man unter den Bestandteilen zur

Herstellung des Harzes eine zusätzliche Menge an Formaldehyd verwendet, die bis zu 3 Molen Formaldehyd pro Mol Melamin geht.

9. Verfahren zur Herstellung einer wäßrigen Zubereitung nach einem der Ansprüche 1 bis 8, dadurch gekennzeichnet, daß man das Harz durch Kondensation von Formaldehyd, Harnstoff und Melamin in basischem Milieu auf folgende Weise bildet:

— man nimmt bei etwa 40°C das Formaldehyd in wäßriger Lösung und die Polymethylol-Verbindung, gegebenenfalls mit dem Alkanolamin,

— man fügt dem basischen Katalysator, vorzugsweise Natriumhydroxid, zu

— man fügt den Harnstoff zu, um ein intermediäres Harz zu bilden,

— man bringt das Reaktionsgemisch auf etwa 80°C, man setzt erneut basischen Katalysator und dann das Melamin zu,

— man hält die Temperatur auf etwa 80°C während der Zeit, die für die Kondensationsreaktion mit dem Melamin notwendig ist, wobei man eine quasi unendliche Verdünnbarkeit mit Wasser wahrt,

— man kühlt auf etwa 30°C ab,

— man stellt gegebenenfalls den pH auf einen Wert von etwa 9 ein.

10. Verfahren nach Anspruch 9, dadurch gekennzeichnet, daß

— der Harnstoff während etwa 30 min zugesetzt wird,

— das Gemisch in 30 min auf etwa 80°C gebracht wird,

— man fügt zur auf etwa 80°C erwärmten Mischung in etwa 10 min den basischen Katalysator und dann das Melamiun während etwa 30 min zu,

— man hält die Temperatur des Gemisches auf etwa 80°C während etwa 90 min.

11. Verfahren nach einem der Ansprüche 9 oder 10, dadurch gekennzeichnet, daß man nach Abkühlen den Formaldehyd in wäßriger Lösung in den Anteilen zusetzt, die notwendig sind, um eine Verdünnbarkeit mit Wasser von mindestens 1000% zu erhalten.

12. Verfahren nach Anspruch 11, dadurch gekennzeichnet, daß man bis zu 3 Molen Formaldehyd pro Mol Melamin zusetzt.

13. Bindemittel für Mineralfasern zur Verwendung bei hoher Temperatur, dadurch gekennzeichnet, daß es die wäßrige Harzzubereitung nach einem der Ansprüche 1 bis 8, zusätzlichen Harnstoff, Bindemittelzusätze und eine wäßrige Phenolharzzubereitung des üblichen Resoltyps enthält.

14. Bindemittel nach Anspruch 13, dadurch gekennzeichnet, daß es auf 100 Teile Trockenmaterial die wäßrige Harzzubereitung nach einem der Ansprüche 1 bis 8 in einem An-teil von 30 bis 60 Teilen Trockenmasse, den zusätzlichen Harnstoff in einem Anteil von 20 bis 40 Trockenmasse und ein wäßriges Phenolharz des gewöhnlichen Resoltyps in einem Anteil von 10 bis 30 Teilen Trockenmasse enthält, wobei der Rest der Zubereitung Bindemittelzusätze und Wasser ist.

15. Bindemittel für Mineralfasern, dadurch gekennzeichnet, daß es die wäßrige Harzzubereitung nach einem der Ansprüche 1 bis 8, zusätzlichen Harnstoff und Bindemittelzusätze enthält.

16. Bindemittel nach Anspruch 16, (15), dadurch gekennzeichnet, daß es auf 100 Teile Trockenmaterial die wäßrige Zubereitung nach einem der Ansprüche 1 bis 8 im Verhältnis von 65 bis 90 Teilen Trockenmasse, zusätzlichen Harnstoff im Verhältnis von 10 bis 35 Teilen Trockenmasse enthält und der Rest der Zubereitung Bindemittelzusätze und Wasser sind.

17. Verfahren zur Herstellung eines Isolationsproduktes auf Grundlage von diskreten Mineralfasern, wobei man die Fasern durch zentrifugales Ziehen bildet, die Fasern mit einem Bindemittel auf Grundlage einer Wäßrigen Harzzubereitung behandelt und die behandelten Fasern einer Wärmebehandlung unterwirft, die die Faser nach Entfernung von Wasser vernetzt, dadurch gekennzeichnet, daß man die Fasern mit einem Bindemittel nach einem der Ansprüche 13 bis 16 behandelt.

**Claims**

1. Aqueous composition of aminoplastic resin which can be used in a sizing composition for treating discontinuous mineral fibres, characterized in that the resin is obtained by condensation, in a basic medium, of formaldehyde, urea and melamine in the presence of a polymethylol compound having a functionality of at least 3 and the general formula:

$$R—C—(CH_2\,OH)_3 \quad \text{or} \quad R—C—(CH_2\,OH)_2—CH_2—O—CH_2—C(CH_2\,OH)_2—R$$

wherein R is an aliphatic hydrocarbon radical which may or may not comprise a hydroxyl group;

— the molar ratio F/M of the number of mols of formaldehyde in relation to the number of mols of melamine being between (0.5 U/M + 1.5) and (3 U/M + 3);

— the molar ratio U/M of the number of mols of urea in relation to the number of mols of melamine being between 1.5 and 5;

— the amount of the polymethylol compound being between 0.2 and 2 mols per mol of melamine;

— the resin having a dilutability of at least 1000% at ambient temperature;

— the resin being stable during storage.

2. Composition as claimed in claim 1, characterised in that polymethylol compound is selected from pentaerythritol, dipentaerythritol, trimethylolpropane, ditrimethylolpropane.

3. Composition as claimed in one of claims 1 and 2, characterised in that the polymethylol compound is

present in a ratio of 0.25 to 0.5 mols per mol of melamine.

4. Composition as claimed in one of claims 1 to 3, characterised in that the condensation reaction occurs in the presence of an alkanolamine.

5. Composition as claimed in claim 4, characterised in that the alkanolamine is selected from triethanolamine, diethanolamine, dimethylethanolamine.

6. Composition as claimed in one of claims 1 to 5, characterised in that the ingredients of the resin are taken in the following quantities per M mol of melamine:

— 0.2 M mols to 2 M mols of polymethylol compound;
— 1.5 M mols to 5 M mols of urea, that is U mols of urea;
— 0.5 U + 1.5 M to 3 U + 3 M mols of formaldehyde;
— 0 mols to 0.01 M mols of alkanolamine;
— 0.1 M mols to 0.1 M mols of a basic catalyst.

7. Composition as claimed in one of claims 1 to 5, characterised in that the ingredients for the resin preparation are taken in the following quantities per M mols of melamine:

— 0.25 M mols to 0.5 M mols of polymethylol compound;
— 1.5 M mols to 2.5 M mols of urea, that is U mols of urea;
— 0.5 U + 1.5 M to 3 U + 3 M mols of formaldehyde;
— 0 to 0.01 M mols of alkanolamine;
— 0.01 to 0.1 M mols of a basic catalyst.

8. Composition as claimed in claim 6 or 7, characterised in that a supplementary amount of formaldehyde which can amount to up to 3 mols of formaldehyde per mol of melamine is used among the ingredients for the resin preparation.

9. Process for preparing an aqueous composition according to one of claims 1 to 8, characterised in that the resin is formed by condensation in a basic medium of formaldehyde, urea and melamine in the following manner:

— at about 40°C the formaldehyde as an aqueous solution is brought into contact with the polymethylol compound and possibly with the alkanolamine;
— the basic catalyst, preferably soda, is added;
— the urea is added to form an intermediate resin;
— the reactional mixture is brought to approximately 80°C, the basic catalyst is added again then the melamine is added;
— the temperature is maintained in the region of 80°C for a period necessary for the condensation reaction with the melamine whilst retaining a quasi infinite dilutability in water;
— the mixture is cooled to approximately 30°C;
— if necessary, the pH is adjusted to a value in the region of 9.

10. Process as claimed in claim 9, characterised in that:

— the urea is added for approximately 30 minutes;
— the mixture is brought to approximately 80°C in 30 minutes;
— the basic catalyst is added to the mixture which has been brought to approximately 80°C in approximately 10 minutes, then the melamine is added for approximately 30 minutes;
— the temperature of the mixture is maintained at approximately 80°C for approximately 90 minutes.

11. Process as claimed in any one of claims 9 or 10, characterised in that, after cooling, formaldehyde in an aqueous solution is added in the proportions necessary for obtaining a dilutability in water of at least 1000%.

12. Process as claimed in claim 11, characterised in that up to 3 mols of formaldehyde are added per mol of melamine.

13. Sizing composition for mineral fibres intended for use at high temperatures, characterised in that it contains the aqueous resin composition as claimed in one of claims 1 to 8, supplementary urea, sizing additives and an aqueous composition of phenolic resin of the usual resol type.

14. Sizing composition as claimed in claim 13, characterised in that for 100 parts of dry material it comprises the aqueous resin solution according to one of claims 1 to 8, in a ratio of 30 to 60 parts of dry material, supplementary urea in a ratio of 20 to 40 parts of dry material and an aqueous composition of phenolic resin of the usual resol type in a ratio of 10 to 30 parts of dry material, the remainder of the composition being sizing additives and water.

15. Sizing composition for mineral fibres, characterised in that it comprises the aqueous resin composition as claimed in one of claims 1 to 8, supplementary urea and sizing additives.

16. Sizing composition as claimed in claim 16, (15) characterised in that for 100 parts of dry material, it comprises the aqueous composition as claimed in one of claims 1 to 8 in a ratio of 65 to 90 parts of dry material, supplementary urea in a ratio of 10 to 35 parts of dry material, the remainder of the composition being sizing additives and water.

17. Process for manufacturing an insulation product based on discontinuous mineral fibres, in accordance with which the fibres are formed by centrifugal drawing, the fibres are treated with a sizing composition based on an aqueous resin composition, and the fibres are subjected to a heat treatment which reticulates the resin after the water has been eliminated, characterised in that the fibres are treated with a sizing composition as claimed in one of claims 13 to 16.